# EUROPÄISCHE PATENTSCHRIFT

(11) **EP 0 589 399 B1**
(45) Veröffentlichungstag und Bekanntmachung des Hinweises auf die Patenterteilung: **11.12.1996**
(21) Anmeldenummer: 93115122.9
(22) Anmeldetag: 20.09.1993
(51) Int. Cl.: F16B 25/00

(54) **Selbstfurchende Schraube**
Self-tapping screw
Vis auto-taraudeuse

(30) Priorität: 21.09.1992 DE 4231546
(43) Veröffentlichungstag der Anmeldung: 30.03.1994
(73) Patentinhaber: HANS SCHRIEVER GmbH & Co., D-58515 Lüdenscheid (DE)
(72) Erfinder: Güven, Ali Hikmet, D-57319 Bad Berleburg (DE)
(74) Vertreter: Körber, Wolfhart, Dr. rer.nat.

(56) Entgegenhaltungen:
- DE-A- 3 114 138
- FR-A- 2 500 090
- GB-A- 508 867

## Beschreibung

Die Erfindung betrifft eine selbstfurchende Schraube, insbesondere für Thermoplaste, mit großem Verhältnis zwischen Außendurchmesser und Kerndurchmesser sowie einem kleinen Flankenwinkel, wobei zwischen den Gewindegängen Kernabschnitte angeordnet sind, von denen sich jeder, ausgehend von der Fußlinie der dem Schraubenkopf zugewandten benachbarten Gewindeflanke in Richtung zu der der Schraubenspitze zugewandten benachbarten Gewindeflanke in einer geraden Mantellinie über seine Gesamtlänge verjüngt.

Eine derartige Schraube ist aus der DE-A-3 114 138 bekannt. Sie dient dazu, in Thermoplasten Schraubverbindungen mit niedrigem Eindrehmoment und hoher Tragfähigkeit herzustellen. Dabei fallen während des Eindrehvorganges keine Späne an. Das thermoplastische Material wird durch die Schraube beim Eindrehen mit den bei Montagearbeiten im industriellen Maßstab üblichen hohen Drehzahlen vielmehr lediglich erwärmt und verdrängt.

Dieser Vorgang des Verdrängens von Material, bei dem das Material jeweils an den Gewindeflanken verdichtet wird und so die Tragfähigkeit der Schraubverbindung erhöht, läßt sich noch erheblich verbessern. Erreicht wird dies dadurch, daß das Verhältnis zwischen dem Gewinde-Außendurchmesser und dem größten Kerndurchmesser etwa den Wert 1,6, hat, daß das Verhältnis zwischen dem Gewinde-Außendurchmesser und dem axialen Abstand der Gewindegänge etwa 2,3 beträgt und daß die Übergänge zwischen den Gewindeflanken und den jeweils benachbarten Kernabschnitten abgerundet sind.

Die vorstehend angegebenen Beträge hinsichtlich des Verhältnisses zwischen dem Außendurchmesser der Schraube einerseits und deren größtem Kerndurchmesser bzw. dem axialen Abstand der Gewindegänge andererseits sind zwar in der DE-A-2 754 870 für eine selbstfurchende Schraube für Thermoplaste an sich bereits genannt worden. Die dort beschriebene Schraube weist jedoch Kernabschnitte zwischen den Gewindegängen auf, die aus jeweils zwei identischen kegelstumpfförmigen Bereichen bestehen. Diese stoßen mit ihren Grundflächen kleineren Durchmessers jeweils in der Mitte zwischen den Gewindegängen aneinander. Die beim Einschraubvorgang verdrängte Materialanteile werden folglich an diese Stelle in der Mitte und nicht wie bei der eingangs erwähnten Schraube und beim Gegenstand der Erfindung gegen die Gewindegänge transportiert. Wegen dieses grundsätzlich anderen Materialflusses haben die in der DE-A-2 754 870 genannten Verhältniswerte völlig andere Auswirkungen, so daß die aus dieser Druckschrift bekannte Schraube insofern nicht mit dem Gegenstand der Erfindung verglichen werden kann.

Bei der erfindungsgemäß ausgebildeten Schraube kann das beim Eindrehen verdrängte Material, ohne durch scharfe Winkel in seinem Fluß beeinträchtigt zu werden, gegen die an den Bereich des kleinsten Kerndurchmessers angrenzende Gewindeflanke strömen und dort verdichtet werden. Hieraus resultieren ein im Vergleich mit dem Stand der Technik verringertes Einschraubmoment und eine festere Verankerung im Material, so daß die erfindungsgemäße Schraube ohne Materialzerstörung höher belastbar ist.

Vorteilhafterweise liegt der Neigungswinkel zwischen den Mantellinien jedes Kernabschnitts und der Schraubenlängsachse im Bereich von etwa 4° bis etwa 14°, vorzugsweise bei etwa 8°.

Zur Erzielung hoher axialer und geringer radialer Kraftkomponenten sowie einer geringen Reibung an den Gewindeflanken ist das Gewinde mit Vorteil als Spitzgewinde mit geraden Gewindeflanken ausgebildet, wobei sich ein Flankenwinkel von kleiner als 48°, vorzugsweise im Bereich von etwa 30°, als besonders günstig herausgestellt hat. Die Winkelhalbierende des Flankenwinkels verläuft hier vorteilhafterweise senkrecht zur Schraubenlängsachse.

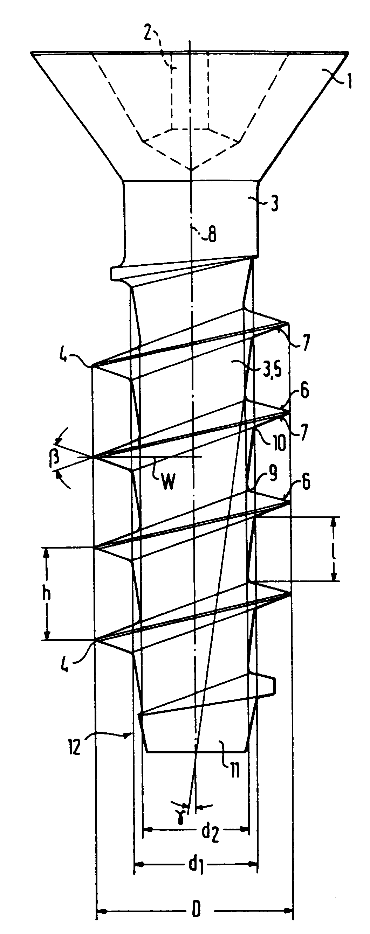

Nachstehend ist die Erfindung anhand eines bevorzugten Ausführungsbeispiels unter Bezugnahme auf den Schrauben-Längsschnitt der beigefügten, einzigen Figur näher beschrieben.

Die in der Figur dargestellte selbstfurchende Schraube ist für Thermoplaste und Materialien mit ähnlichen Eigenschaften vorgesehen und umfaßt einen Schraubenkopf 1 in Senkkopfausführung mit einem Kreuzschlitz 2 und einen im wesentlichen zylindrischen Schraubenschaft oder Kern 3 mit eingängigem Spitzgewinde, zwischen dessen einzelnen Gewindegängen 4 je ein Kernabschnitt 5 angeordnet ist.

Die jeweils einen Gewindegang 4 definierenden Gewindeflanken 6,7 schließen einen Flankenwinkel β von 30° ein, wobei die Winkelhalbierende W senkrecht zur Schraubenlängsachse 8 verläuft. Je eine Fußlinie 9,10 kennzeichnet den abgerundeten Übergang zwischen den Gewindeflanken 6,7 jedes Gewindeganges 4 und dem jeweils benachbarten Kernabschnitt 5. Die Gewindeflanken 6 sind dem Schraubenkopf 1 und die Gewindeflanken 7 der Schraubenspitze 11 zugewandt.

Jeder Kernabschnitt 5 ist konisch ausgebildet und verjüngt sich ausgehend von der Fußlinie 10 der benachbarten Gewindeflanke 7 bis zur Fußlinie 9 der benachbarten Gewindeflanke 6, d.h. in Richtung Schraubenspitze 11, mit einem Neigungswinkel γ gegenüber der Schraubenlängsachse 8. Jeder Kernabschnitt 5 weist somit einen der Fußlinie 10 zugeordneten größten Kerndurchmesser d₁ sowie einen der Fußlinie 9 zugeordneten kleinsten Kerndurchmesser d₂ auf. Dementsprechend ist die Tragtiefe der Gewindeflanke 6, d.h. die Differenz zwischen dem Gewinde-Außendurchmesser D und dem Kerndurchmesser d₂, größer als die bis zum Kerndurchmesser d₁ gemessene Tragtiefe der Gewindeflanke 7.

Im Bereich der Schraubenspitze 11 ist ein sogenannter Anschneidbereich 12 ausgebildet, in welchem die Gewindegänge 4 allmählich bis zum Überstand Null über den Schaft 3 auslaufen. Der Anschneidbereich 12 endet stumpf mit einem Durchmesser, der etwas kleiner als d₂ ist. In diesem Fall ist die Schraube für das Eindrehen in eine Bohrung vorgesehen. Wenn hingegen die Schraube ohne Bohrung in ein Material eingedreht werden soll, ist der Anschneidbereich vorzugsweise mit einer Bohrspitze (nicht gezeigt) ausgebildet.

Der Gewinde-Außendurchmesser D steht zum größten Kerndurchmesser d₁ in einem Verhältnis von 1,65, während er sich zur Steigung h, d.h. zum axialen Abstand der Gewindegänge 4, wie 2,3 : 1 verhält. Der Neigungswinkel γ beträgt 8^{o}. Bei vorgegebenem Außendurchmesser D läßt sich aus dem Flankenwinkel β, dem Neigungswinkel γ und den vorgenannten Verhältnissen D/d₁ sowie D/h ohne weiteres die axiale Länge 1 jedes Kennabschnitts 5 sowie dessen kleinster Kerndurchmesser d₂ ermitteln.

Beim Eindrehen der Schraube in thermoplastisches Material mit dem bei Montagearbeiten im industriellen Maßstab üblichen hohen Drehzahlen werden Materialanteile bis zur Fließfähigkeit erwärmt und in die Bereiche zwischen den Gewindegängen 4 bis gegen die Mantelfläche des jeweiligen Kernabschnitts 5 verdrängt, um längs derselben in Richtung der jeweils benachbarten Gewindeflanke 6 zu strömen und gegen dieselbe verdichtet zu werden. Durch die Strömung der verdrängten Materialanteile in lediglich eine Richtung ist ein geringes Einschraubmoment erforderlich.

Sobald der Schraubenkopf 1 am Material anliegt, wird die Schraube bei weiterer Drehung entsprechend vorgespannt. Aufgrund der großen Tragtiefe der Gewindeflanken 6 und des in deren Bereichen verdichteten Materials können hohe Vorspannkräfte von den Gewindeflanken 6 aufgebracht und vom Material ohne Gefahr der Zerstörung aufgenommen werden.

## Patentansprüche

1. Selbstfurchende Schraube, insbesondere für Thermoplaste, rnit großem Verhältnis zwischen Außendurchmesser (D) und Kerndurchmesser (d₁) sowie einem kleinen Flankenwinkel (β), wobei zwischen den Gewindegängen (4) Kernabschnitte (5) angeordnet sind, von denen sich jeder, ausgehend von der Fußlinie (10) der dem Schraubenkopf (1) zugewandten benachbarten Gewindeflanke (7) in Richtung zu der der Schraubenspitze (11) zugewandten benachbarten Gewindeflanke (6) in einer geraden Mantellinie über seine Gesamtlänge (1) verjüngt,
gekennzeichnet, durch die Kombination folgender Merkmale:
- das Verhältnis zwischen dem Gewinde-Außendurchmesser (D) und dem größten Kerndurchmesser (d₁) beträgt etwa 1,6,
- das Verhältnis zwischen dem Gewinde-Außendurchmesser (D) und dem axialen Abstand (h) der Gewindegänge (4) beträgt etwa 2,3 und
- die Übergänge zwischen den Gewindeflanken (6,7) und den jeweils benachbarten Kernabschnitten (5) sind abgerundet.

2. Selbstfurchende Schraube nach Anspruch 1, dadurch gekennzeichnet, daß der Neigungswinkel (γ) zwischen den Mantellinien jedes Kernabschnitts (5) und der Schraubenlängsachse (8) im Bereich von etwa 4° bis etwa 14°, vorzugsweise bei etwa 8°, liegt.

3. Selbstfurchende Schraube nach Anspruch 1 oder 2, dadurch gekennzeichnet, daß das Gewinde als Spitzgewinde mit geraden Gewindeflanken ausgebildet ist.

4. Selbstfurchende Schraube nach wenigstens einem der vorhergehenden Ansprüche, dadurch gekennzeichnet, daß die Gewindeflanken (6,7) je einen Flankenwinkel (β) von kleiner als 48°, vorzugsweise im Bereich von etwa 30°, einschließen.

5. Selbstfurchende Schraube nach wenigstens einem der vorhergehenden Ansprüche, dadurch gekennzeichnet, daß die Winkelhalbierende (W) des Flankenwinkels (β) senkrecht zur Schraubenlängsachse (8) verläuft.

## Claims

1. Self-tapping screw, in particular for thermosetting plastics, having a large ratio between outer diameter (D) and core diameter (d₁) and a small flank angle (β), whereby core sections (5) are arranged between the thread turns (4) of which each core section, starting from the base line (10) of the neighbouring thread flank (7) towards the screw head (1), tapers in the direction of the neighbouring thread flank (6) towards the screw tip (11) over its entire length (1) along a straight generator,
characterized by the combination of the following features:
- the ratio between the thread outer diameter (D) and the largest core diameter (d₁) is about 1.6,
- the ratio between the thread outer diameter (D) and the axial spacing (h) of the thread turns (4) is about 2.3 and
- the transitions between the thread flanks (6, 7) and the respective neighbouring core sections (5) are rounded.

2. Self-tapping screw according to claim 1,
characterized in that,
the angle of inclination (γ) between the generators of each core section (5) and the screw longitudinal axis (8) is in the range from about 4° to about 14°, preferably about 8°.

3. Self-tapping screw according to claim 1 or 2,
characterized in that,
the thread is formed as a sharp thread with straight thread flanks.

4. Self-tapping screw according to any preceding claim,
characterized in that,
the thread flanks (6) each enclose a flank angle (β) of less than 48°, preferably in the region of about 30°.

5. Self-tapping screw according to any preceding claim,
characterized in that,
the angle bisector (W) of the flank angle (β) extends perpendicularly of the screw longitudinal axis (8).

## Revendications

1. Vis autotaraudeuse, en particulier pour matières thermoplastiques, avec un grand rapport entre le diamètre extérieur (D) et le diamètre du noyau (d₁) ainsi qu'un petit angle de flanc (β), entre les filets (4) se trouvant des portions de noyau (5) dont chacune, partant de la ligne de pied (10) du flanc de filetage (7) voisin, tourné vers la tête de vis (1), se rétrécit, en direction du flanc de filetage (6), tourné vers la pointe de vis (11), en une génératrice rectiligne, sur toute sa longueur (1), caractérisée par la combinaison des caractéristiques suivantes :
- le rapport entre le diamètre extérieur du filetage (D) et le plus grand diamètre du noyau (d₁) est d'environ 1,6,
- le rapport entre le diamètre extérieur du filetage (D) et la distance axiale (h) des filets (4) est d'environ 2,3 et
- les transitions entre les flancs du filetage (6, 7) et les portions de noyau (5) voisines sont arrondies.

2. Vis autotaraudeuse selon la revendication 1, caractérisée en ce que l'angle d'inclinaison (γ) entre les génératrices de chaque portion de noyau (5) et l'axe longitudinal de vis (8) est de l'ordre de 4° environ à 14° environ, de préférence égal à 8° environ.

3. Vis autotaraudeuse selon la revendication 1 ou 2, caractérisée en ce que le filetage est un filetage pointu avec flancs de filetage droits.

4. Vis autotaraudeuse selon l'une au moins des revendications précédentes, caractérisée en ce que les flancs de filetage (6, 7) enferment un angle de flanc (β) inférieur à 48°, de préférence de l'ordre de 30° environ.

5. Vis autotaraudeuse selon l'une au moins des revendications précédentes, caractérisée en ce que la bissectrice (W) de l'angle de flanc (β) est perpendiculaire à l'axe longitudinal de vis (8).
